# EUROPEAN PATENT APPLICATION

(11) **EP 1 450 422 A1**
(43) Date of publication of application: **25.08.2004**
(21) Application number: 02780048.1
(22) Date of filing: 07.11.2002
(51) Int. Cl.: H01M 2/20, H01M 2/10

(54) **BATTERY CONNECTION STRUCTURE, BATTERY MODULE, AND BATTERY PACK**

(30) Priority: 27.11.2001 JP 2001360930
(71) Applicant: MATSUSHITA ELECTRIC INDUSTRIAL CO., LTD., Kadoma-shi, Osaka 571-8501 (JP)
(72) Inventor: HIRANO, Fujio, Hiratsuka-shi, Kanagawa 254-0016 (JP)
(74) Representative: Rackham, Stephen Neil
(86) International application number: PCT/JP2002/011634
(87) International publication number: WO 2003/047013

(57) **Abstract**

A connection plate (38) in form of flat plate is welded to be connected to portion that are close to each other, i.e., a connection-electrode portion (28) of one of two adjacent cells (13) and a bottom of a cell case (14) of the other cell, while being bridged between the connection-electrode portion (28) and the bottom of the cell case (14), thereby forming an inexpensive connecting structure between cells, that reduces the electric resistance, by simple processes. A battery module (12) having a solid structure impervious to vibration or shock is formed by accommodating cylindrical cells (13) in cell-accommodating portions (31), each of which has a square shape seen from the front, of a holder case (30) made of synthetic resin with their cell axes arranged in parallel, and by closing both sides of the holder case (30) with cover members (53, 54) having radiation holes (57-60). Then, a'battery pack (100) is formed by attaching outer plates (68, 69, 70, 71) to a plurality of such battery modules (12) that are arranged and integrating them.

## Description

### TECHNICAL FIELD

The present invention relates to a connecting structure between cells for forming a battery module having a required output voltage by connecting a plurality of cells, a battery module formed by using that connecting structure, and a battery pack formed by arranging and electrically connecting a number of such battery modules and mechanically coupling them.

### BACKGROUND ART

As a conventional connecting structure between cells for forming a battery module that obtains a required output voltage by connecting a plurality of cells in series, various techniques have been known, for example, as disclosed in Japanese Laid-Open Patent Publication Nos. Hei 10-106533, 2001-126703, and 2000-149907 (hereinafter, referred to as the first, second, and third conventional techniques, respectively).

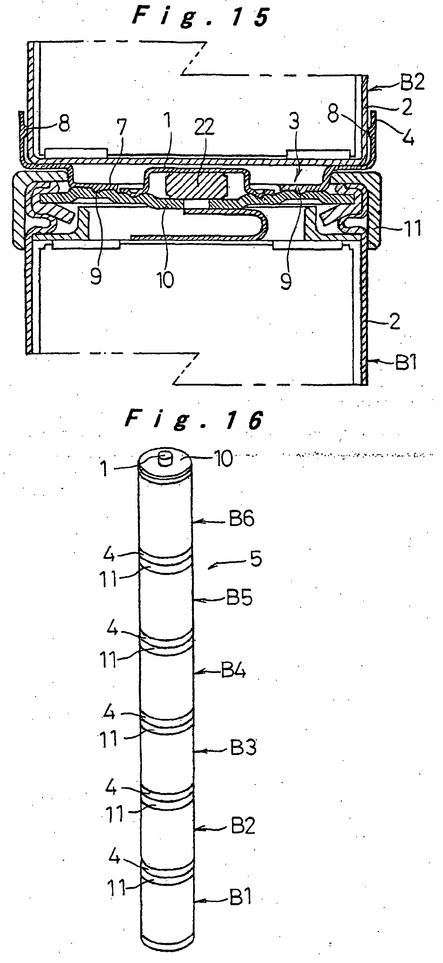

According to the first conventional technique, as shown in Fig. 15, a dish-like portion of a connector 3 arranged between two cells B1 and B2 is connected to a sealing plate 10 on which a metal cap 1 serving as a positive terminal of one cell B1, and to a cell case 2 serving as a negative terminal of the other cell B2 by projection welding. More specifically, the connector 3 includes a cylindrical portion 4 fitted onto the outer surface of the cell case 2 and a flat portion 7 that can be in contact with the sealing plate 10, as well as projections 8 and 9 for projection welding, that are provided at positions on circles of the same radius at regular intervals of 90° on the inner surface of the cylindrical portion 4 and the lower surface of the flat portion 7, respectively. By performing projection welding via those projections 8 and 9, the flat portion 7 of the connector 3 is connected to the sealing plate 10 electrically connected to the metal cap 1 of one cell B1 while the cylindrical portion 4 is connected to the cell case 2 of the other cell B2. Moreover, an insulation ring 11 prevents short-circuit between the cell case 2 of the cell B1 and the connector 3. Thus, both the cells B1 and B2 are electrically connected in series and mechanically coupled.

Fig. 16 illustrates a conventional battery module 5. This battery module 5 is formed by connecting a required number of cells B1 to B6 for obtaining a required output voltage (six in the shown example), in series with the aforementioned connecting structure.

The second conventional technique provides a similar structure to that provided by the first conventional technique, but is different from the first conventional technique in that a central coupling portion (flat portion) and a flange portion (cylindrical portion) of a dish-like connection member which is approximately the same connector 3 of the first conventional technique are provided with pressing convex portions, respectively, via which the dish-like connector is welded to two cells by laser.

In the third conventional technique, a plurality of cells are connected directly to each other without using the connector used in the first and second conventional techniques. More specifically, a sealing member for closing an opening of the cell case is provided with a connection-electrode portion that projects toward the outside along the cell axis. Such a connection-electrode portion of one of two cells that are adjacent is coupled directly to the bottom of the case of the other cell, which is opposite to the opening of the case, by welding via a plurality of projections provided on the connection-electrode portion. Thus, a plurality of cells are arranged in line along the axes of the cells and are connected in series.

A number of battery modules, each formed using any of the connecting structures between cells of the first, second, and third conventional techniques, are electrically connected in series to form a battery pack which can provides a high tension power. The battery pack for providing such a high tension power is used in a hybrid electric vehicle that uses a combination of an internal-combustion engine and a battery driving motor for obtaining a driving force, as a driving power supply for the above motor. As this type of battery pack, battery packs have been conventionally known which are disclosed in Japanese Laid-Open Patent Publication Nos. 10-270006 and 2000-223096 (referred to as the fourth and fifth conventional technique, respectively), for example.

The battery pack according to the fourth conventional technique has a structure in which a plurality of battery modules shown in Fig. 16 are arranged in a multistage arrangement and are accommodated in a plastic holder case in form of prismatic box having an opening at its top. The holder case has circular through holes formed in both end walls, through which the battery modules 5 each having an elongated cylindrical shape are respectively inserted, the number of the through holes being the same as the number of the battery modules to be accommodated. The holder case also includes an intermediate wall for stably holding the battery modules, between the end walls parallel to them. The intermediate wall also has as many circular through holes as those provided on each end wall. The battery modules are inserted into the corresponding through holes provided in both end walls and the intermediate wall and are held in position in the holder case

A battery pack according to the fifth conventional technique includes a holder case for holding a plurality of battery modules in parallel to each other. The holder case includes cover cases provided on both sides and an intermediate case provided between both the cover cases. Moreover, the holder case includes holder ribs for holding a plurality of battery modules arranged in a plurality of rows and stages on both faces of the intermediate case and on the inner faces of the cover cases, so as to project therefrom. The holder case holds those rows and stages of battery modules in position by coupling the cover cases on both sides and the intermediate case and sandwiching those battery modules between the holder ribs.

However, the battery module 5 formed by using the connecting structure according to the first conventional technique has an elongated cylindrical shape obtained by arranging and coupling a plurality of cells B1-B6 along the cell-axis direction. Therefore, it is quite difficult to manufacture the entire outer diameter, the length, and the parallelism with high precision. In addition, projection welding has to be performed in an unstably posture, i.e., a posture in which the projections 8 for welding of the cylindrical portion 4 of the connector 3 are brought into contact with the outer surface of the circular cell case 2. This decreases the yield of the battery module 5. Moreover, the number of the welding times is large and therefore the productivity is not good. For example, when two of the cells B1-B6, that are adjacent, are connected to a single connector 3, welding has to be performed six times, i.e., welding is performed four times between the cell cases 2 of the connector 3 in series welding and is performed twice between the connector 3 and the sealing plate 10 in series welding. Furthermore, a current flowing:between each two adjacent cells of the cells B1-B6 flows along a path running through the connector 3. Thus, the current path becomes longer and the electric resistance also becomes larger by the amount corresponding to the increase of the current path.

In addition, the connector 3 and the insulation ring 11 are attached to every connection of each two of the cells B1-B6, that are adjacent. This increases the cost of parts, and further reduces the productivity because a mounting process for mounting the connector 3 and the insulation ring 11 is required. Moreover, in many cases this battery module may be used in an environment in which this battery module receives vibration, for example, in a vehicle or an electric bicycle. However, in the structure of coupling the cells B1-B6 in the first conventional technique, the bending strength between the cells B1 and B2 is low and the mechanical strength at the coupling between the cells B1 and B2 is not sufficient. Therefore, there is a drawback that the connector 3 is broken and the cells B1 and B2 tend to uncouple when the coupling between the cells B1 and B2 receives severe vibration.

Moreover, the battery module formed by using the connecting structure according to the second conventional technique has substantially the same structure as that of the first conventional technique. Therefore, it is quite difficult to fabricate the outer diameter, the length, and the parallelism of the battery module with high precision. In addition, in the battery module, laser welding is performed in an unstable posture. Therefore, this battery module has the same drawbacks as those in the first conventional techniques as follows; the yield is not high; the productivity is not high because the number of the welding times is large; the needs of the connector and the insulation ring increase the cost of parts, and also increase the number of processes so as to further decrease the productivity; and the connector is easy to be broken when it receives severe vibration. Furthermore, in this battery module, in a case where a thicker connector is used in order to prevent the connector from being broken when it receives vibration, a stress is applied to the sealing plate so as to lose airtightness of the sealing plate.

Moreover, the battery module formed by using the connecting structure according to the third conventional technique has advantages that the connector and the insulation ring are not required and the number of the welding times can be reduced as compared with the battery modules of the first and second conventional techniques. This reduces the cost. However, this battery module is inevitably lower in the mechanical strength and the bending strength when it receives vibration or shock from the side, as compared with those of the first and second conventional techniques, because the cells are welded and coupled directly to each other. Therefore, in a case where this battery module is used in an environment where it receives severe vibration, such as an electric vehicle or electric bicycle, the cells must be held in the holder case by a quite solid structure, for example. If such a structure is employed, the cost is increased.

On the other hand, the conventional battery pack is formed by arranging and connecting a required number of battery modules according to any of the first to third conventional techniques. In the battery pack according to the fourth conventional technique mentioned above, however, a mold of the holder case that has the through holes on both end walls and the intermediate wall becomes complicated because it is difficult to remove the mold in a portion forming the above shape. Therefore, the fabrication of the holder case takes a lot of efforts, thus increasing the fabrication cost. Moreover, the outer diameter of the battery module is not constant in its entire length because the connector 3 and the insulation ring 11 bulge at the connection between the cells. Therefore, even if the respective through holes in both the end walls and the intermediate wall of the holder case are formed with high precision, it is impossible to insert all the battery modules into the respective through holes with no gap and thus the battery module cannot be held stably without being jolted. In addition, work for inserting the battery module into the small through hole and attaching thereto takes a lot of trouble and time and therefore decreases the productivity. Furthermore, when the number of the battery modules to be accommodated was changed, it is necessary to fabricate the holder case by using a new mold. This further increases the cost.

Furthermore, in the battery pack according to the fifth conventional technique, it is difficult to hold all the battery modules evenly in a case where any deformation occurred in either one of the cover cases and the intermediate case that form together the holder case. Thus, the cover cases and the intermediate case must be fabricated to prevent any deformation and the shape of the holder ribs and the dimensions between the holder ribs must be fabricated with high precision. This increases the cost of material and the fabrication cost.

The present invention was made in view of the drawbacks of the aforementioned conventional techniques, and aims to provide a connecting structure between cells that is formed by easy processes at a low cost and reduces electric resistance; a battery module having a solid structure impervious to vibration or shock; and a battery pack that employs a required structure by easily connecting a number of battery modules.

### DISCLOSURE OF THE INVENTION

In order to achieve the above object, a connecting structure between cells according to the present invention comprises a plurality of cells each of which including: a cylindrical cell case having a bottom serving as one electrode; a sealing plate for closing an opening of the cell case to be electrically insulated, the sealing plate serves as the other electrode; and a ring-shaped connection-electrode portion being formed near an outer circumference of the sealing plate so as to project outward along a cell-axis direction, wherein the cells are arranged in parallel with their cell axes arranged in parallel, and a connection plate in form of flat plate is bridged between the connection-electrode portion of one of each two of the cells that are adjacent, and the bottom of the cell case of the other cell, and is connected to a portion near the connection-electrode portion and a portion near the bottom of the cell case by welding.

In this connecting structure between cells, welding is performed in a stable posture in which the connection plate, that is a plain flat plate, is bridged at both sides between the ring-shaped connection-electrode portion of one of two cells arranged with their cell axis arranged in parallel and the bottom of the cell case of the other cell so as to be supported. Therefore, a trouble such as a defective joint, never occurs, thus largely improving the yield. Moreover, the number of the welding times required for jointing the connection plate and the connection-electrode portion and jointing the connection plate and the bottom of the cell case is two. Therefore, the number of the welding times is greatly reduced, thus dramatically improving the productivity. Furthermore, since the cells are arranged in parallel with their cell axis arranged in parallel, a current path between the two cells becomes the shortest because it passes through positions that are close to each other, i.e., the ring-shaped connection-electrode portion of one cell and the outer circumferential portion of the bottom of the other cell. Therefore, the electric resistance can be greatly reduced.

A battery module according to the present invention includes a holder case, being made of synthetic resin, having a substantially prismatic shape with a thickness substantially equal to a length of a cell in a cell-axis direction and includes a plurality of cell-accommodating portions arranged in one or more rows, each of the cell-accommodating portions extending through the holder case along the thickness direction of the holder case and being a square seen from the front, the square having a side that is substantially equal in length to the outer diameter of the cylindrical cell, wherein two adjacent cells of the cells inserted into the cell-accommodating portions, respectively, are electrically connected and mechanically coupled by any of the above-described connecting structures of the present invention; openings on both sides of the holder case in the thickness direction are closed with cover members fixed to the openings; and each of the cover members is provided with radiation holes at positions corresponding to spaces between the cells and walls of the cell-accommodating portions and portions corresponding to spaces between the connection plate and the walls, the shapes of the radiation holes corresponding to the respective spaces.

In this battery module, the shaping precision of the holder case made of synthetic resin, uniquely determines the dimensions of the shape. Therefore, variation in the dimensions never occurs after the battery module is assembled, thus providing the precisely-shaped battery module. Moreover, since each cell is held in a completely electrically insulated state by being accommodated in the corresponding cell-accommodating portion, the insulation ring and the outer tube made of resin in the conventional battery module are not required, reducing the cost of material and improving the productivity. Furthermore, since each cell is secured by the cover members while being in contact at four portions on its outer circumferential surface with four walls forming the cell-accommodating portion, the cell is held surely without being jolted even when the battery module receives vibration or shock. In addition, the spaces formed between each cell and the walls of the cell-accommodating portion and the spaces formed between the connection plate and the walls of the cell-accommodating portion are in communication with the outside of the holder case via the radiation holes of the cover members on both sides. Thus, a heat-radiation path is formed that extends from one face side of the holder case, through a surrounding portion of each cell to the other face side. Therefore, each cell is cooled highly effectively by air flowing through the heat-radiation path, and all of a number of cells are cooled evenly.

A battery pack according to the present invention includes: the holder case of the battery module of the present invention, having a positive terminal and a negative terminal, being provided with coupling members at one end in the thickness direction on both sides with respect to the arrangement direction and attachment members at the other end in the thickness direction on both sides with respect to the arrangement direction, the coupling members and the attachment members are formed by insert molding; a plurality of battery module units being provided each of which is formed by integrating two battery modules with each other by coupling them at the respective coupling members with fixing members, one of two battery modules being laid on the other with its orientation in the thickness direction inverted; a plurality of outer plates surrounding the plurality of battery module units being arranged in parallel, the battery module units are integrated with the outer plates by being fixed at the attachment members with fixing members to the outer plates; and the positive and negative terminals for external connection, of the respective battery modules are electrically connected via a bus bar, so that the cells incorporated in the respective battery modules are connected in series.

In this battery pack, the battery module has the shape that is uniquely determined by the shaping precision of the holder case and is shaped with high precision, and a relatively large number of cells are stably accommodated and held in the holder case. Therefore, the battery module unit is formed by easily coupling the battery modules to each other by a simple fixing means using the fixing member such as a setscrew. Moreover, while a plurality of battery module units are easily integrated with a plurality of outer plates arranged to surround those battery module units, by a simple fixing means using the fixing member such as a setscrew, and a very solid structure can be easily assembled. Thus, this battery pack is fabricated with extremely high productivity. In addition, since the battery module employs a block-like form for stably holding a number of cells, the number of the battery modules is changed only by changing the shapes of the outer plates each of which is formed by bending a plate. Thus, this battery pack accommodates the change of the number of the battery modules at a very low cost, as compared to the shaping of the holder case using a new mold in the conventional battery pack. Furthermore, the heat-radiation paths of the two battery modules of the battery module unit, one of which is laid on the other, communicate with each other. Thus, a cooling function for each cell is ensured even in a case where a number of battery modules are integrated. Therefore, it is unnecessary to include a cooling mechanism such as a cooling fin blade that was conventionally used.

### BRIEF DESCRIPTION OF THE DRAWINGS

Fig. 1 is an exploded perspective view of a battery module according to an embodiment of the present invention, showing the arrangement of components thereof;
Fig. 2 is a perspective view of a lower cover of the above battery module, while being inverted;
Fig. 3A is a perspective view of a cell that is one component of the above battery module; and Fig. 3B is a cross-sectional view thereof, taken along line IIIB-IIIB in Fig. 3A;
Figs. 4A, 4B and 4C illustrate a connecting structure between cells according to an embodiment of the present invention, which applied to connection between the cells in the above battery module; Fig. 4A is a plan view; Fig. 48 is a front view; and Fig. 4C is an enlarged cross-sectional view, taken along line IVC-IVC in Fig. 4A;
Fig. 5 is a plan view, showing a part of a state in which the cells inserted in an accommodation space of the holder case are connected with connection plates during production of the above battery module;
Fig. 6 is a perspective view showing a state in which the assembly of the above battery module has been completed;
Fig. 7 is a perspective view showing the arrangement of three battery module units using six battery modules mentioned above during a fabrication process;
Fig. 8 is a perspective view showing a fabrication process of a battery pack using the above three battery module units;
Fig. 9 is a vertical cross-sectional view of the battery pack according to one embodiment of the present invention, formed by the above three battery module units, taken along a direction perpendicular to the longitudinal direction;
Fig. 10A is a plan view of a pair of connection plates used in a connecting structure between cells according to another embodiment of the present invention; and Fig. 10B is a plan view of the connecting structure according to this embodiment;
Fig. 11A is a plan view of a connecting structure according to still another embodiment of the present invention; Fig. 11B is an enlarged cross-sectional view of a main part of the connecting structure shown in Fig. 11B, taken along line XIB-XIB in Fig. 11A;
Fig. 12 is a plan view of a battery module according to another embodiment of the present invention during a fabrication process;
Fig. 13 is an exploded perspective view of a battery module according to still another embodiment of the present invention;
Fig. 14A is a perspective view of a lower cover of the above battery module, while being inverted; and Fig. 14B is a perspective view of that battery module in a state when the assembly of the battery module has been completed;
Fig. 15 is a vertical cross-sectional view of a conventional connecting structure between cells; and
Fig. 16 is a perspective view of a battery module using the conventional connecting structure.

### BEST MODE FOR-CARRYING OUT THE INVENTION

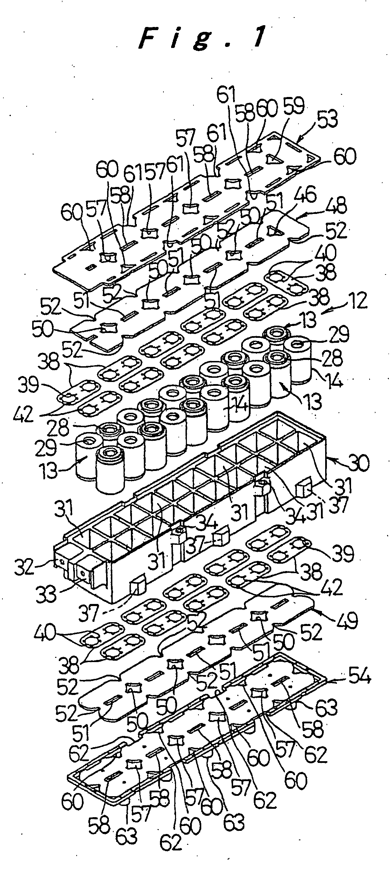

Preferred embodiments of the present invention are described below, referring to the drawings. Fig. 1 is an exploded perspective view of a battery module 12 according to an embodiment of the present invention, showing the arrangement of components of the battery module 12. In this embodiment, an example is described in which twenty cylindrical cells 13 of the same type and the same standard are connected in series. The cell 13 is a nickel metal hydride battery, for example.

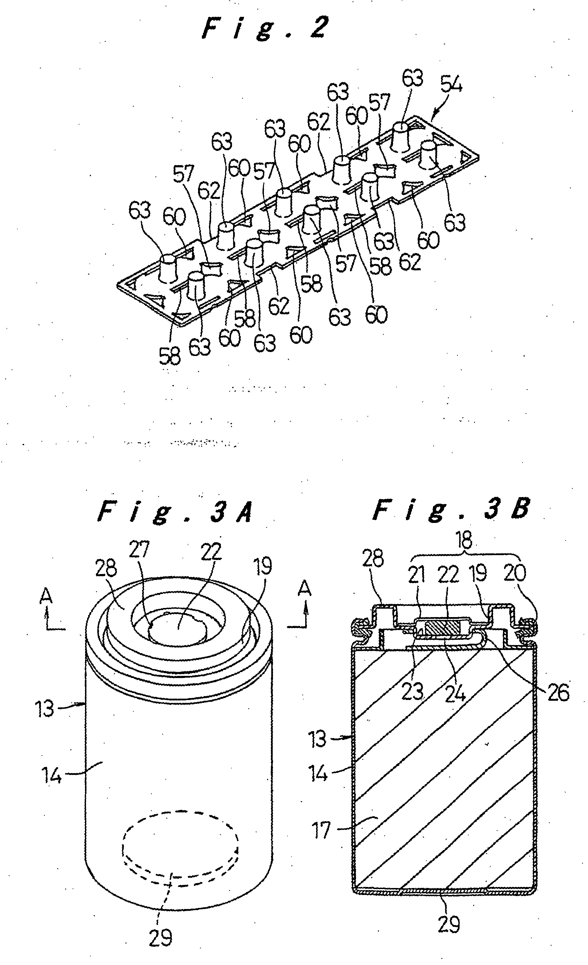

First, the structure of the cell 13 applied to the above battery module 12 is described. Fig. 3A is a perspective view of the cell 13 and Fig. 3B is a cross-sectional view thereof, taken along line IIIB-IIIB in Fig. 3A. A cell case 14 serving as a negative electrode has a cylindrical shape with a bottom which includes an opening at one end. In the cell case 14 are accommodated an electrode set 17 including an positive electrode plate and a negative electrode plate, that are well-known and are spirally wound with a separator sandwiched therebetween, and battery electrolyte (not shown). The opening of the cell case 14 is closed with a sealing member 18 formed by a sealing plate 19, an insulation gasket 20, a metal cap 21, and a rubber valve 22.

The sealing member 19 is electrically insulated from the cell case 14 with the insulation gasket 20 at its periphery and is fixed to the opening of the cell case 14, which is caulked, via the insulation gasket 20. Thus, the opening of the cell case 14 is closed. On the sealing plate 19, a ring-shaped connection-electrode portion 28 that projects outward along the cell-axis direction is formed wear the periphery of the sealing plate 19 to be concentric with respect to the sealing plate 19. A positive lead 28 drawn out from the electrode set 17 is connected to the sealing plate 19. Therefore, the connection-electrode portion 28 formed on the sealing plate 19 serves as a positive terminal. In addition, a circular concave portion 29 that becomes concave inward is formed at the center of the bottom of the cell case 14 serving as a negative electrode, to be concentric with respect to the bottom of the cell case 14.

The rubber valve 22 is accommodated in a space formed between an concave part 23 at the center of the sealing plate 19 and the metal cap 21, thereby sealing a gas-discharge hole 24 formed in the concave part 23. This rubber valve 22 is elastically deformed by a gas pressure inside the cell applied via the gas-discharge hole 24 when the gas pressure has abnormally increased and has reached a valve-opening pressure, thereby opening the gas-discharge hole 24. Thus, gas inside the cell is discharged to the outside of the cell through the gas-discharge hole 24 and a gas-emission hole 27 of the metal cap 21.

The above cell 13 is accommodated within a holder case 30 formed of synthetic resin. The holder case 30 has a substantially prismatic shape having the same thickness as the length of the cell 13 in the cell-axis direction, and includes cell-accommodating portions 31 for accommodating the twenty cells 13, respectively, that are arranged in two rows each containing ten cell-accommodating portions 31. Each cell-accommodating portion 31 is a square surrounded by four walls when seen from the front, and extends in the thickness direction of the holder case 30 through the holder case 30. Thus, the thickness in the extending direction of the cell-accommodating portion 31 is set to be the same as the length of the cell 13 in the cell-axis direction. Moreover, one side of the square, that is the shape of the cell-accommodating portion 31 seen from the front, is set to be substantially the same as the outside diameter of the cell 13.

Referring to Fig. 1, a positive terminal 32 and a negative terminal 33 for external connection, formed by screw nuts, are provided by insert molding integrally with the holder case 30 on the outer surface of the holder case 30 at one end (left end in Fig. 1) in an arrangement direction in which the cell-accommodating portions 31 are arranged (longitudinal direction). Moreover, on each of outer faces on both sides of the holder case 30 along the above arrangement direction, two coupling members 34 are provided on the upper-face side (upper side in Fig. 1) in the thickness direction, and three attachment members 37 are provided on the lower-face side (lower side in Fig. 1) in the thickness direction. The coupling members 34 and the attachment members 37 are formed by screwing nuts integrally with the holder case 30 by insertion molding.

The cells 13 are respectively inserted and held in the corresponding cell-accommodating portions 31 of the holder case 30 with their cell axes arranged in parallel. In this state, each two cells 13, that are adjacent, in each of rows of cells are alternately coupled by connection plates 38 on the upper-face side and those on the lower-face side sequentially, thus connection of the cells 13 in series are achieved. Moreover, the cell 13 at the left end in the back row is connected at the bottom of its cell case 14 to the positive terminal 32 for external connection by the connection plate 38, while the cell 13 at the left end in the front row is connected at its connection-electrode portion 28 to the negative terminal 33 for external connection by the connection plate 38. Furthermore, the right-end one of the connection plates 38 on the upper-face side, connects two cells 13, that are positioned at right ends in the back row and the front row and are thus adjacent, to each other, as is apparent from the arrangement of that connection plate 38.

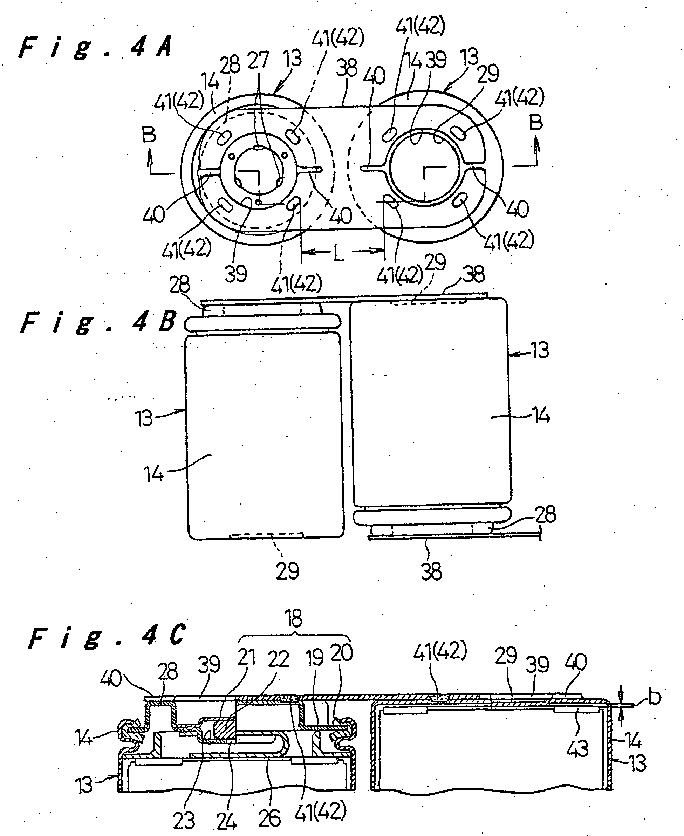

Figs. 4A-4C show a connecting structure between cells according to an embodiment of the present invention, which connects each two cells 13 adjacent to each other by the above connection plate. Fig. 4A is a plan view; Fig. 4B is a front view; and Fig. 4C is an enlarged cross-sectional view taken along line IVC-IVC in Fig. 4A. The connection plate 38 is an approximately rectangular flat plate with four corners rounded, as clearly shown in Fig. 4A, and is formed by three cladding layers of Ni-Cu-Ni. Pores 39 are provided on both sides in the longitudinal direction of the rectangular, and slits 40 are provided to extend outward from opposed sides of the pores 39 in the diameter direction along the longitudinal direction. The connection plate 38 also has four projections 42 for welding (nuggets 41 which were formed after projection welding was performed via the projections 42 are shown in Fig. 4A) that were formed in advance at positions on the same circle outside the hole 39 at regular intervals of 90°. Therefore, the connection plate 38 is symmetrical with respect to the center in the longitudinal direction. This embodiment illustrates a case where the connection plate 38 is welded via the projections 42.

In the above connecting structure, when the connection plate 38 is bridged between two adjacent cells 13, four projections 42 on one side (left side in Fig. 4A) are brought into contact with the connection-electrode portion 28 of one cell 13 and four projections 42 on the other side (right side in Fig. 4A) are brought into contact with portions surrounding the concave portion 29 in the bottom of the other cell 13. In this state, a well-known projection welding is performed. This projection welding is performed in a stable posture in which the connection plate 38, that is a plain flat plate, is bridged between the ring-shaped connection-electrode portion 28 of one of two cells 13, that are arranged with their cell axes arranged in parallel, and the bottom of the cell case 14 of the other cell 13 and is therefore supported at both ends by them. Therefore, any trouble such as defective joint caused by welding in an unstable posture as in the above-described conventional connecting structure cannot occur, thus largely improving the yield.

In the projection welding, for the left cell 13 in Figs. 4A-4C, while a positive welding electrode is brought into contact with a side face of the connection-electrode portion 28 and a negative welding electrode is brought into contact with portions of the connection plate 38 that are opposed to the projections 42, a high voltage is applied across both the welding electrodes by means of an inverter DC power supply. Thus, a welding current locally flows between the projections 42 and the connection-electrode portion 28 in a concentrated manner because they have small contact areas and thus small contact resistance, so that the four projections 42 are fused by heat generated by that welding current and thus the connection plate 38 and the connection-electrode portion 28 are welded to each other at the nugget portions 41 while being in close contact stably. Therefore, the connection plate 38 and the connection-electrode portion 28 are tightly jointed via the four nugget portions 41 by performing projection welding once.

Similarly, for the right cell 13 in Figs. 4A-4C, while a negative welding electrode is brought into contact with the outer surface of the cell case 14 and a positive welding electrode is brought into contact with portions of the connection plate 38 that are opposed to the projections 42, a high voltage is applied across both the welding electrodes by means of the inverter DC power supply. Thus, the connection plate 38 and the bottom of the cell case 14 are tightly jointed via the four nugget portions 41 by performing projection welding once.

Thus, each two cells 13 that are adjacent is connected to each other by performing projection welding twice. Therefore, the number of the welding times becomes largely reduced as compared to the conventional connecting structure shown in Fig. 15 where the welding is performed six times, for example, thus dramatically improving productivity. Moreover, an ineffective shunt current is also reduced dramatically by the pore 39 and a pair of slits 40 in the above projection welding.

Moreover, according to the above connecting structure, the both ends of the connection plate 38 are welded to positions that are close to each other, i.e., the ring-shaped connection-electrode. portion 28 of one cell 13, and the outer circumference of the portion outside the concave portion 29 of the other cell 13. Therefore, a distance L of a current path between the two adjacent cells 13 shown in Fig. 4A becomes the shortest, thereby largely reducing the electric resistance of that path. On the other hand, according to the conventional connecting structure shown in Fig. 15, the flat portion 7 and the cylindrical portion 4 of the dish-line connector 3, which provide the longest distance therebetween, are connected to two adjacent cells B1 and B2, respectively. Therefore, the distance of the current path between the cells B1 and B2 becomes longer and therefore the electric resistance also increases. In addition, the connection plate 38 of this embodiment is formed of three cladding layers. In this connection plate 38, while an intermediate Cu layer ensures excellent conductivity, Ni layers on both sides are well welded to a nickel-plated steel sheet that is typical material for the cell case 14. Therefore, the electric resistance is further reduced. Accordingly, the above connecting structure suppresses a power loss in the connection plate 38 to be minimum.

In addition, according to the above connecting structure, the projection welding is performed, while one welding electrode is in contact with the outer side face of the ring-shaped connection-electrode portion 28 that projects at a position that is laterally and upwardly away from the metal cap 21 for holding the rubber valve 22 and the other welding electrode is in contact with the portions in the connection plate 38 that are opposed to the projections 42. Thus, no current flows through the metal cap 21 and therefore deformation of the rubber valve 22 caused by the heat from the metal cap 22 never occurs. In this manner, a necessary operation of the rubber valve 22 is always ensured in this connecting structure. On the other hand, according to the conventional connecting structure shown in Fig. 15, the projection welding has to be performed while the welding electrodes are in contact with the portions of the connector 3 that are opposed to the projections 9 and the metal cap If respectively. Thus, the metal cap 1 through which a current flows becomes concave inwardly by thermal effects, causing the deformation of the rubber valve 22.

Furthermore, according to the above connecting structure, the provision of the concave portion 29 that becomes concave inwardly at the bottom of the cell 13 allows a small gap b to be provided between a negative collector 43 and the bottom of the cell case 14, as shown in Fig. 4C. Therefore, even if the bottom of the cell case 14 is deformed to expand inwardly by thermal effects when that bottom of the cell case 14 and the connection plate 38 are welded to each other via projections, this deformation will not adversely affect the negative collector 43 or the electrode set 17. Thus, the above connecting structure ensures a required capacity and stable performance of the cell. On the other hand, in the conventional connecting structure, especially in the structure in which the cells are connected directly to each other with no connection member, as described in the third conventional technique, the negative collector and/or the electrode set was/were deformed by a pressure applied by the bottom of the cell case that expanded inwardly when the projection welding was performed.

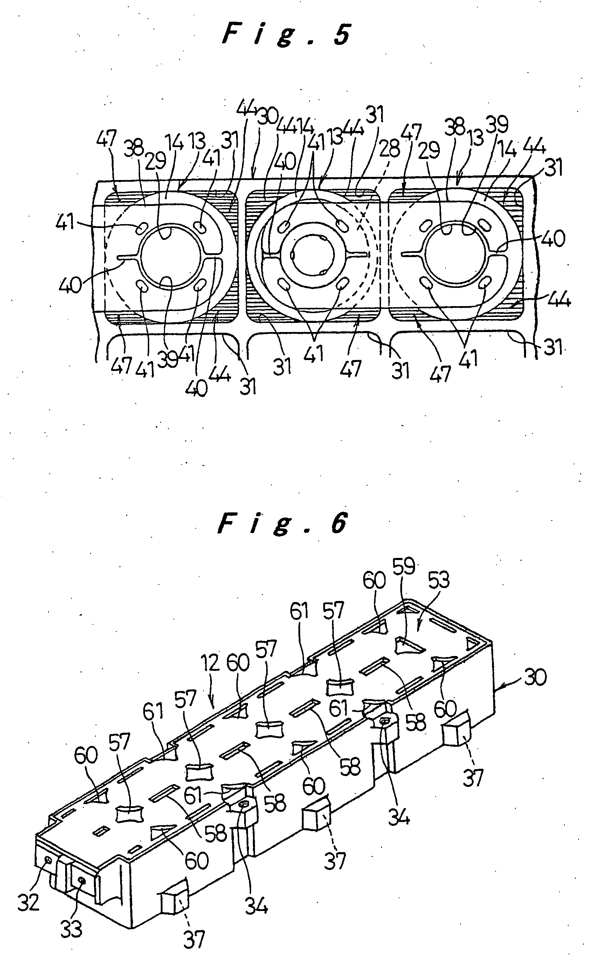

The above connecting structure is formed by connecting each two of the cells 13 inserted in the respective cell-accommodating portions 31 of the holder case 30 with the connection plate 38 during the fabrication of the battery module 12, the two being adjacent to each other. Fig. 5 is a plan view showing a part of a state in which the cells 13 inserted in the cell-accommodating portions 31 of the holder case 30 are connected by the connection plates 38 during the fabrication of the battery module 12. In this state, each cell 13 is inserted as it is, i.e., with no protrusion such as a connector or an insulation ring, on its sides, unlike the conventional structure. In addition, the length of one side of each cell-accommodating portion 31, that is a square seen from the front, is set to substantially the same as the outer diameter of the cell case 14 of the cell 13. Therefore, four positions on the outer circumference of the case of the cell 13, that are located at regular intervals of 90°, are brought into contact with four walls forming the corresponding cell-accommodating portion 31, so that the cell 13 is surely held without jolting even when receiving vibration or shock.

Moreover, when the cells 13 inserted in the cell-accommodating portions 31 are connected with the connection plates 38, a gap 44 having an approximately triangular cross-section is formed between each cell 13 and the walls of the corresponding cell-accommodating portion 31 on both the upper and lower face sides of the holder case 30. An elongated gap 47 is also formed between the connection plate 38 and the cell-accommodating portion 31 on both the upper and lower face sides of the holder case 30. These spaces 44 and 47 are shown with parallel lines in Fig. 5. These gaps 44 and 47 serve as effective heat-radiation spaces for the cells 13, when the battery module 12 operates.

Next, returning to Fig. 1, the description of the battery module 12 is further provided. After the cells 13 were inserted in the cell-accommodating portions 31 and the connection plate 38 connected each two adjacent cells 13 to each other thereby completing the connecting structure, an upper elastic sheet 48 and a lower elastic sheet 49, that are formed of elastic material such as rubber, are placed on the openings on the upper-face side and the lower-face side of the holder case 30, respectively. Both the elastic sheets 48 and 49 have substantially the same strip-like shape. Each elastic sheet 48, 49 has diamond-shaped radiation holes 50 and elongated rectangular radiation holes 51 that are formed alternately along the longitudinal direction at the center in the widthwise direction, as well as radiation notches 52 formed on all sides. Moreover, the upper elastic sheet 48 includes an approximately triangular radiation hole 46 provided at right end thereof in Fig. 1, in addition to the above radiation holes 50 and 51.

The diamond-shaped radiation hole 50 in each of the upper and lower elastic sheets 48 and 49 has such a shape that accommodates four gaps 44 formed between the above cells 13 and the cell-accommodating portions 31; the elongated rectangular radiation hole 51 has such a shape that accommodates four gaps 47 formed between the above connection plates 38 and the cell-accommodating portions 31; and the radiation notch 52 has such a shape that accommodates two gaps 44 formed between the above cells 13 and the cell-accommodating portions 31. Moreover, the triangular radiation hole 46 formed in the upper elastic sheet 48 at right end in Fig. 1 corresponds to a gap (not shown) formed between the connection plate 38 bridged between the cells 13 in the front and back rows, and the walls of the cell-accommodating portions 31.

The openings on both the upper-face side and the lower-face side of the above holder case 30 are sealed by performing ultrasonic welding of an upper cover 53 and a lower cover 54, that are formed of synthetic resin, to the peripheral portions of the openings of the holder case 30, while those upper and lower covers 53 and 54 are placed on the openings on the upper-face and lower-face sides of the holder case 30 with the above elastic sheets 48 and 49 interposed therebetween, respectively. The upper cover 53 includes radiation holes 57, 58, 59 and 60 that are provided at positions corresponding to the radiation holes 50, 51, 46 and the radiation notches 52 of the upper elastic sheet 48 to have corresponding shapes, respectively, and also includes relief notches 61 provided on both sides at positions corresponding to the coupling members 34 of the holder case 30.

On the other hand, the lower cover 54 includes radiation holes 57, 58 and 60 at positions corresponding to the radiation holes 50 and 51 and the radiation notches 52 of the lower elastic sheet 49, as well as relief notches 61 on both sides at positions corresponding to the coupling members 34 of the holder case 30. Moreover, the lower cover 54 further includes relief notches 62 on both sides at positions corresponding to the attachment members 37 of the holder case 30. In addition, ten supporting-leg projections 63 are formed to project, integrally with the lower cover 54 on the outer side face of the lower cover 54, as shown in Fig. 2 which illustrates the lower cover 54 while being inverted.

Next, assembly processes of the battery module 12 are described. While the respective components are arranged in the state as shown in Fig. 1, the cells 13 are inserted into the respective cell-accommodating portions 31 of the holder case 30 in the arrangement shown in Fig. 1. The connection plate 38 is then bridged between each two adjacent cells 13 and welded thereto on the upper-face side of the holder case 30, thereby forming the aforementioned connecting structure and mutually connecting each two adjacent cells 13. Two cells 13 arranged at the left end in Fig. 1 are also connected to the positive and negative terminals 32 and 33 for external connection with the connection plates 38, respectively. Subsequently, the upper elastic sheet 48 is placed on the welded connection plates 38, and the upper cover 53 is placed on the upper elastic sheet 48. Then, the opening-peripheral portion of the upper cover 53 and the peripheral portion of the holder case 30 are welded to each other by ultrasonic welding, so that the upper-end opening of the holder case 30 is sealed.

Subsequently, the holder case 30 with its upper-end opening sealed with the upper cover 53 is inverted, and then the connection plate 38 is then placed to be bridged between each two adjacent cells 13 and is finally welded. Thus, the above connecting structure is formed and each two adjacent cells 13 are mutually connected. In this manner, twenty cells 13 are secured in the holder case 30 while being electrically connected to each other in series and mechanically coupled. Then, the lower elastic sheet 49 is placed on the welded-connection plates 38, and the lower cover 54 is placed on the lower elastic sheet 49. By sealing the lower-end opening of the holder case 30 by ultrasonic welding of the peripheral portion of the lower cover 54 to the opening-peripheral portion of the holder case 30, the battery module 12 shown in Fig. 6 is completed.

An attachment means for attaching the upper and lower covers 53 and 54 to the holder case 30 is not limited to ultrasonic welding described in the above embodiment. For example, setscrews can be used.

The battery module 12 obtains the advantageous effects described for the connecting structure, as well as the following effects. Unlike the unstable structure of the conventional battery module as shown in Fig. 16 in which a plurality of cells B1-B6 are arranged in line along the cell axes and are coupled, in this battery module 12, the cells 13 are accommodated in the cell-accommodating portions 31 of the holder case 30, respectively, in the arrangement in which the cells 13 are arranged with their cell axes arranged in parallel; each cell 13 is held by the contact with four walls of the cell-accommodating portion 31 without jolting; shock or vibration applied from the outside of the holder case 30 is absorbed by the elastic sheets 48 and 49 placed on both ends of the cells 13 in the cell-axis direction and thus has no effect on the cells 13; and the openings of the holder case 30 on both sides are completely sealed by being welded to the upper and lower covers 53 and 54. Therefore, although this battery module 12 accommodates a relatively large number of cells 13, each cell is surely held stably while being protected and no breakdown occurs, even in a case where this battery 12 is mounted in an environment where severe vibration or shock is easy to occur, for example, in an electric vehicle or an electric tool.

Moreover, the gaps 44 and 47 formed at four corners of the cell-accommodating portion 31 that is a square seen from the front, with the cells 13 communicate with the outside on the upper-face side and the lower-face side of the holder case 30, through the radiation holes 50, 51 and 46 and the radiation notches 52 of the upper and lower elastic sheets 48 and 49 and the radiation holes 57-60 of the upper and lower covers 53 and 54. Thus, heat-radiation paths are formed each running from one face side of the holder case 30, through the surrounding portion of each cell 13 and to the other face side. Therefore, an air flowing through the heat-radiation paths cools each cell 13 significantly effectively and all of a relatively large number of cells 13 are evenly cooled. This eliminates the need of the cooling mechanism provided in the conventional battery pack, such as a cooling fin blade, in a battery pack formed by a large number of such battery modules 12. This battery pack is described in more detail later.

Furthermore, in the above battery module 12, each cell 13 is accommodated while being surrounded by four walls of the corresponding cell-accommodating portion 31, so that the cells 13 are kept electrically insulated from each other completely. Thus, the insulation ring 11 used for insulating each of the cells B1-B6 in the conventional battery module and an outer tube, formed of resin having electric insulation property and thermal shrinking property, such as polyvinyl chloride, for covering the outer circumferential surface of each of the cells B1-B6 connected in series are not required. Therefore, both reduction in the cost of material and improvement of productivity are achieved.

In addition, it is difficult to fabricate the conventional battery module of the precise shape, length and parallelism, because the connection plate 3 and the insulation ring 11 bulges from the side face of each of the cells B1-B6 connected in series in the cell-axis direction. On the other hand, according to the above battery module 12, the shaping precision of the holder case 30 made of synthetic resin uniquely determines the dimensions of the shape of the battery module 12. Therefore, variation in the dimensions does not occur after the assembly, and the battery module 12 precisely shaped is obtained.

Since the above battery module 12 includes a relatively larger number (twenty in the embodiment) of cells 13 that are included within the holder case 30 and are held by a solid structure, as described above, and also includes the coupling members 34 and the attachment members 37 provided integrally with the holder case 30 that are formed by screwing nuts on the outer face of the holder case 30 by insertion molding, it can be used as a driving power supply for an electric vehicle or an electric tool as it is, unlike the conventional battery module in which six cells B1-B6 are simply connected in series in the cell-axis direction. Especially, the above battery module 12 provides markedly effects when a larger number of such battery modules 12 are coupled to form a battery pack in order to be used as a motor driving power supply for an electric vehicle. Next, the battery pack formed by using the above battery modules 12 is described.

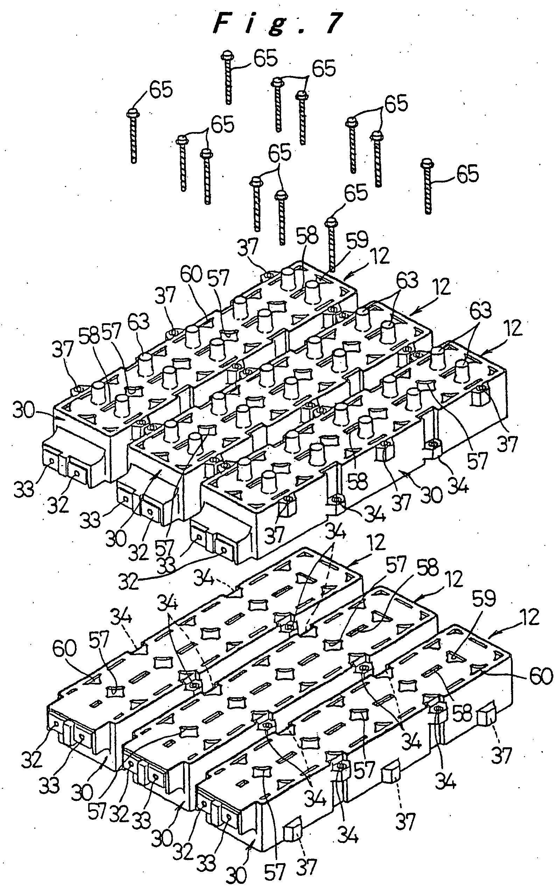

Fig. 7 is an exploded perspective view of the battery pack, showing the arrangement of components of the battery pack in which six battery modules 12 mentioned above are used and thus 120 cells 13 in total are connected in series, during the fabrication. In this battery pack, three battery modules 12 are arranged in parallel in such a manner that they are in close contact. On these three battery modules 12, other three battery modules 12 are placed in the arrangement in which they are inverted. In this arrangement, since two battery modules 12, i.e., the upper and lower battery modules 12 are faced to each other while one of them is inverted with respect to the other, two coupling members 34 on the side of each battery module 12, i.e., total four coupling members 34 are arranged closely and are opposed. Each of these twelve pairs of coupling members 34, in each of which the coupling members 34 are opposed to each other, is screwed together by a setscrew (fixing member) 65. Thus, three battery module units 64 are obtained in which one of two battery modules 12 is laid on the other and they are mutually jointed.

Between the two battery modules 12 in each battery module unit 64, i.e., the upper and lower battery modules 12, the radiation holes 57-60 of the upper and lower covers 53 and 54 that are in contact with each other, match, and communicate. Thus, heat-radiation paths are formed between the two battery modules 12, i.e., the upper and lower battery modules 12 in each battery module unit 64, each running through the surrounding portion of each cell 13 from one face side to the other face side. Therefore, the cooling performance for each cell 13 is ensured even while the upper and lower battery modules 12 are coupled.

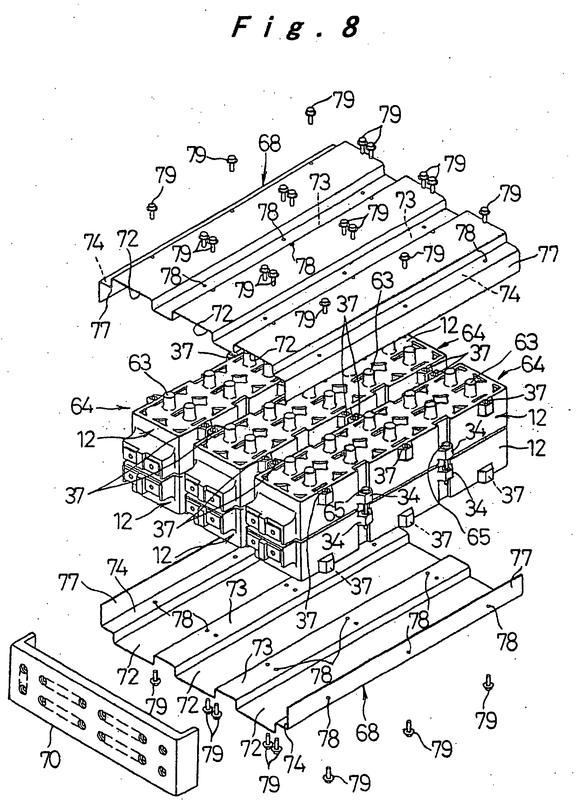

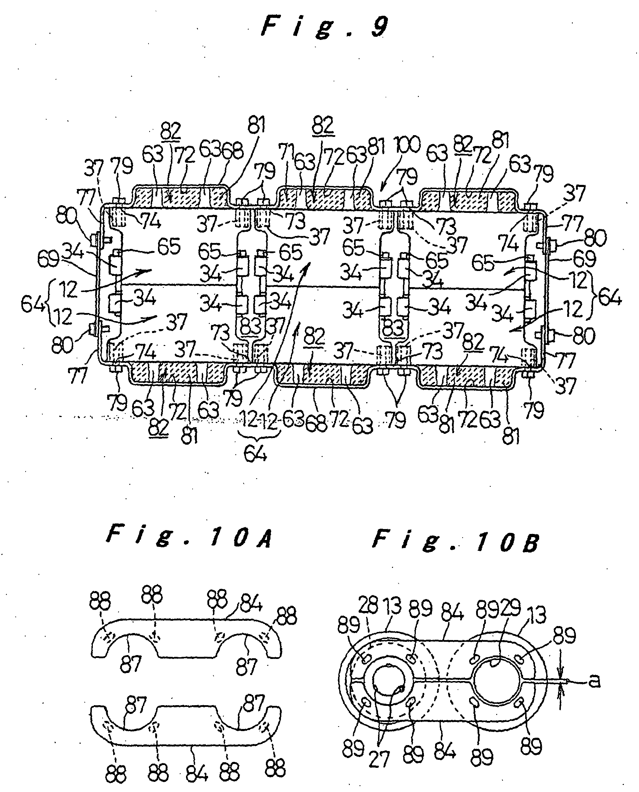

Fig. 8 is a perspective view showing a fabrication process in which the battery pack is formed by using three battery module units 64, and Fig. 9 is a vertical cross-sectional view of the battery pack 100 according to an embodiment of the present invention, formed by using those three battery module units 64, taken along a direction perpendicular to the longitudinal direction (horizontal direction in Fig. 8). This battery pack 100 is formed by integrating three battery module units 64 by using a pair of upper and lower outer plates 68; a pair of side-coupling plates 69 (shown in Fig. 9) for coupling both sides (front side and back side in Fig. 8) of that pair of outer plates 68 to each other; a bus bar 70 (shown in Fig. 8) that is attached to the front ends (left ends in Fig. 8) of both outer plates 68 and electrically connects the positive and negative terminals 32 and 33 for external connection of the respective battery modules 12 mutually, thereby connecting 120 cells 13 in total in series; and a rear-coupling plate 71 (shown in Fig. 9) that can be attached to the rear ends (right ends in Fig. 8) of both the outer plates 68.

As clearly shown in Fig. 9, each of the pair of outer plates 68 has insertion concave parts 72 provided along the longitudinal direction of the outer plate 68, which allow total ten supporting-leg projections 63 extending from the upper and lower surfaces of the respective three battery module units 64 to be inserted thereinto. Each outer plate 68 also includes two attachment faces 73 between those insertion concave parts 72, each of which supports the attachment members 37 of two adjacent battery module units 64. Furthermore, each outer plate 68 includes two attachment faces 74 near both ends, which support the attachment members 37 of the battery module units 64 on both sides. Both sides of the outer plate 68 are bent particularly to the attachment faces 74 so as to form coupling pieces 77. The attachment faces 73 and 74 and the coupling pieces 77 have screw holes 78 at predetermined locations.

Next, an assembly procedure of the above battery pack 100 is described. Three battery module units 64 are positioned so as to insert the supporting-leg projections 63 each projecting from the corresponding battery module unit 64 downward into the insertion concave parts 72 of the outer plate 68 placed under the three battery module units 64 and to match the screw holes 78 of the attachment faces 73 and the respective attachment members 37. By screwing the setscrews 70 and the screw holes 78 and the attachment members 37 thus matched together, the respective battery module units 64 are secured to the lower outer plate 68.

Subsequently, the upper outer plate 68 is placed to cover those three module units 64 at a relative position where the supporting-leg projections 63 projecting from the respective battery module unit 64 upward are inserted into the insertion concave parts 72 of the outer plate 68, and is positioned so as to match the screw holes 78 of the attachment faces 73 and the attachment members 37. By screwing the screw holes 78 and the attachment members 37 thus matched together with the setscrews 79, the three battery module units 64 are also secured to the upper outer plate 68.

Moreover, as shown in Fig. 9, the side-coupling plates 69 on both sides are brought into contact with the corresponding coupling pieces 77 of the upper and lower outer plates 68 from the outside to be positioned with respect to the coupling pieces 77. In this state, setscrews 80 are screwed together with the screw holes 78 of the coupling pieces 77 via insertion holes (not shown) of the side-coupling plates 69, thereby the coupling pieces 77 on each side of the upper and lower outer plates 68 are jointed via the side-coupling plate 69. Finally, the bus bar 70 and the rear-coupling plate 71 are attached to both ends of the upper and lower outer plates 68 by predetermined attachment means (not shown), so that the battery pack 100 is completed.

According to the above battery pack 100, the battery module unit 64 is formed by easily coupling the battery modules 12 by a simple fixing means, i.e., screwing using the setscrews 65. Moreover, a plurality of battery module units 64 is integrated by arranging a pair of outer plates 68, the side-coupling plates 69, the rear-coupling plate 71 and the bus bar 70 to surround those battery module units 64 and by integrating them with a simple fixing means, i.e., screwing them with setscrews 79 and 80. Easy assembly of such a solid structure is allowed because the battery module 12 is formed to be prismatic with a highly-precise shape uniquely determined by the shaping precision of the holder case 30 and a relatively larger number of cells 13 are accommodated within the holder case 30 in a state in which they are not directly influenced by vibration or shock. Therefore, this battery pack 100 is produced with significantly high productivity.

On the other hand, according to the fourth conventional technique mentioned before, the battery pack has an unstable structure in which a plurality of cells are arranged in line along the cell-axis direction and are simply coupled to each other via the connector and the insulation ring. Therefore, it takes a lot of troubles to insert a plurality of such battery modules into the through holes provided in the end walls and the intermediate wall of the holder case having the complicated shape and arrange them in the multistage arrangement including multiple rows of the battery modules. Moreover, since the battery module in which there are various protrusions, such as the connection member and the insulation ring, on the outer circumferential surface of the cells arranged in line, is inserted into the through holes and held, it is difficult to hold the battery modules with no gap between them. The cells may be jolted in the holder case to be broken when receiving vibration or shock. In addition, according to the fifth conventional technique mentioned above, a number of battery modules having the similar structure to that mentioned above are held by the holder ribs provided on the inner faces of the cover cases and the intermediate case of the holder case. Therefore, the fifth conventional technique has the same drawbacks as those mentioned above. The above battery pack 100 overcomes the various drawbacks of the aforementioned conventional techniques all at once.

Moreover, the above battery pack 100 includes the battery module 12 and the battery module units 64 in which the heat-radiation path is provided to run up and down through the surrounding portion of each cell 13. The above battery pack 100 also includes heat-radiation paths 82 that are formed between the respective battery modules 12 and the upper and lower outer plates 68 by inserting the supporting-leg projections 63 into the insertion concave parts 72, as shown in Fig. 9, to extend in the horizontal direction in Fig. 9. In addition, the attachment members 37 of the battery module unit 64 are in contact with those of the adjacent battery module unit 64 at upper and lower positions in a portion between those battery module units 64, while those battery module units 64 are away from each other between the positions at which the attachment members 37 are in contact. Thus, a heat-radiation path 83 is provided between the adjacent battery module units 64. Furthermore, a number of vents 81 in form of slit are formed in the rear-coupling plate 71. Therefore, in the battery pack 100, all of a large number of cells 13, 120 cells in the shown example, are quite effectively cooled and evenly. On the other hand, in the conventional battery pack, since a temperature sensor for detecting the temperature of the cell and a blower that operates based on the temperature detected by this temperature sensor are provided, the structure becomes larger and the cost also increases.

Furthermore, according to this battery pack 100, the battery module 12 has a block-like form in which a number of cells 13 are stably held. Thus, the number of the battery modules 12 can be changed only by changing the shapes of the outer plate 68, side-coupling plate 69, and rear-coupling plate 71. In addition, any of these plates 68, 69, and 71 is formed by deforming just a plate. Therefore, it is possible to manufacture these plates 68, 69 and 71 having various shapes at a quite low cost, thereby accommodating the change of the number of the battery modules 12. On the other hand, according to the conventional battery pack, the holder case having the very complicated shape must be changed. It takes a considerable amount of money to fabricate a new mold for that changed holder case, thus largely increasing the cost. Also, according to the above battery pack 100, in a case where the coupling pieces 77 of each or one of the pair of outer plates 68 are formed to have such a length that couple the outer plates 68 in series, the need of the side-coupling plates 69 will be eliminated, thus further reducing the material cost and the assembly cost.

Fig. 10A is a plan view showing a pair of connection plates 84 used in a connecting structure between cells according to another embodiment of the present invention, and Fig. 10B is a plan view of that connecting structure. The connection plate 84 has a length that allows the connection plate 84 to be bridged between two adjacent cells 13, and includes an approximately semi-circular notch 87 having substantially the same diameter as the inner diameter of the ring-shaped connection-electrode portion 28 of the cell 13, on each side in the longitudinal direction. Near each notch 87 are formed two projections 88 for projection welding. The connection plate 84 is formed of three cladding layers of Ni-Cu-Ni was in the previous embodiment.

The connection plates 84 in the pair mentioned above are bridged between the two adjacent cells 13 to be opposed with a predetermined gap a therebetween, as shown in Fig. 10B. By being welded via the respective projections 88, the connection plates 84 are fixed at nuggets 89 respectively formed by the fused projections 88, to the connection-electrode portion 28 of one of the cells 13 and the bottom of the other cell 13. The gap "a" between the connection plates 84 in the pair is set to be substantially the same as the width of the slot 40 of the connection plate 38 of the previous embodiment.

Therefore, this connecting structure requires one pair of connection plate 84 for connecting two cells 13. However, since the connection plate 84 is provided with no pore or slit, but has a simple shape having notches 87 only, it is possible to mass-produce the connection plates 84 at a low cost. This suppresses the cost increase as compared with the connecting structure of the previous embodiment. Moreover, this connecting structure obtains the same effects as those of the connecting structure of the previous embodiment, and also has a great advantage that the generation of the ineffective shunt current when projection welding is performed is prevented completely because the connection plates 84 as separate members are combined with a predetermined gap "a" therebetween.

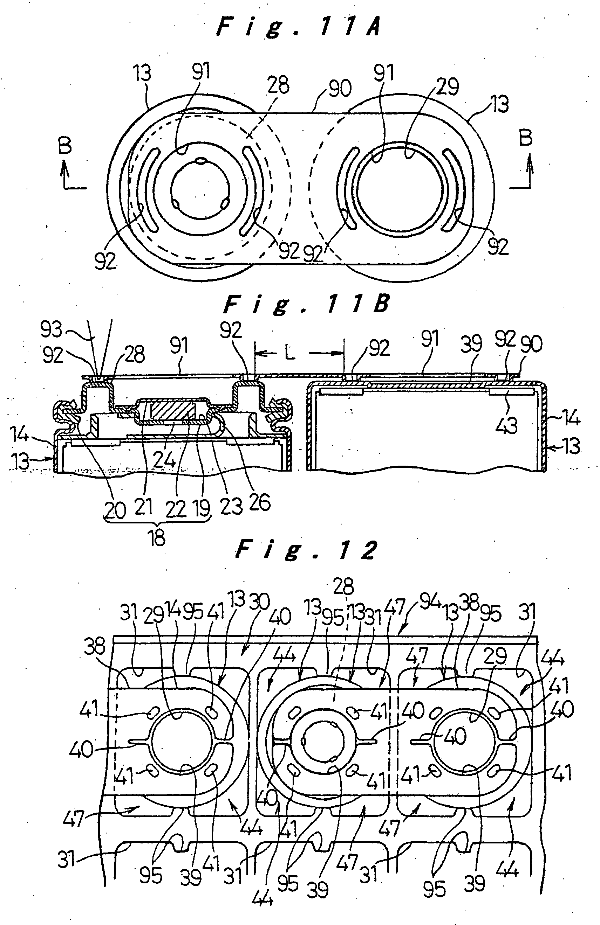

Fig. 11A is a plan view of a connecting structure between cells according to still another embodiment of the present invention, and Fig. 11B is an enlarged cross-sectional view of the main part thereof, taken along lien-XIB-XIB in Fig. 11A. In this embodiment, instead of projection welding used in the above embodiments, a connection plate 90 is connected to two adjacent cells 13 by laser welding or beam welding. The connection plate 90 is formed by a substantially rectangular flat plate formed of three cladding layers of Ni-Cu-Ni, with pores 91 bored on both sides of the flat plate. Each pore 91 has a diameter equal to the inner diameter of the connection-electrode portion 28 of the cell 13. Moreover, two thinner diaphragm portions 92 are formed like an arc of a concentric circle with respect to each pore 91 in such a manner that the center of each thinner diaphragm portion 92 is positioned on a line connecting the centers of both the pores 92.

In this connecting structure, while the above connection plate 90 is bridged between the connection-electrode portion 28 of one of the cells 13 and the bottom of the other cell 13, the respective diaphragm thinner portions 92 are irradiated with beams 93 such as laser beams or light beams, so as to be welded to the connection-electrode portion 28 and the bottom. Thus, both the cells 13 are connected to each other via the connection plate 90.

The connecting structure greatly reduces the electric resistance of the current path between the two adjacent cells 13 by making the distance L of that current path the shortest, as in the connecting structures of the embodiments mentioned above, and obtains substantially the same effects as those obtained by the connecting structures of the embodiments mentioned above. In addition, since laser welding or beam welding is performed by irradiating the diaphragm thinner portions 92 with the beams 93, it is possible to ensure sufficient welding intensity,' thus improving the reliability of the welding. Moreover, this connecting structure includes arc-like slits, instead of the diaphragm thinner portions 92, which are irradiated with the beams 93 to perform laser welding or beam welding. Furthermore, the connection plate 90 is connected to both the cells 13 by resistance welding.

Fig. 12 is a partial plan view showing a fabrication process of the battery module 94 according to another embodiment of the present invention. The only difference between the battery module 94 of this embodiment and the battery module 12 of the previous embodiment is the shape of the holder case 30. More specifically, each cell-accommodating portion 31 of the holder case 30 is a square seen from the front in the previous embodiment, whereas each cell-accommodating portion 31 is a rectangle seen from the front in this embodiment and is provided with supporting ribs 95 integrally with the cell-accommodating portion 31, which project from the inner surfaces of the opposed walls in the longitudinal direction of that rectangle. Both the supporting ribs 95 are arranged in such a manner that the distance between the tips of both the ribs 95 is substantially the same as the outer diameter of the cell case 14 of the cell 13. Thus, the supporting ribs 95 are in contact with the outer surface of the cell 13 on both sides in the diameter direction of the cell 13, and support that cell 13.

Thus, this battery module 94 obtains the same effects as those obtained by the battery module 12 of the previous embodiment, and increases the gap 44 between the cell 13 and the walls of the cell-accommodating portion 31 and the gap 47 between the connection plate 38 and the walls of the cell-accommodating portion 31 by the volume corresponding to the projected length of the supporting ribs 95. Therefore, the amount of air flowing through the gaps 44 and 47 also increase, thereby cooling the cell 13 more effectively.

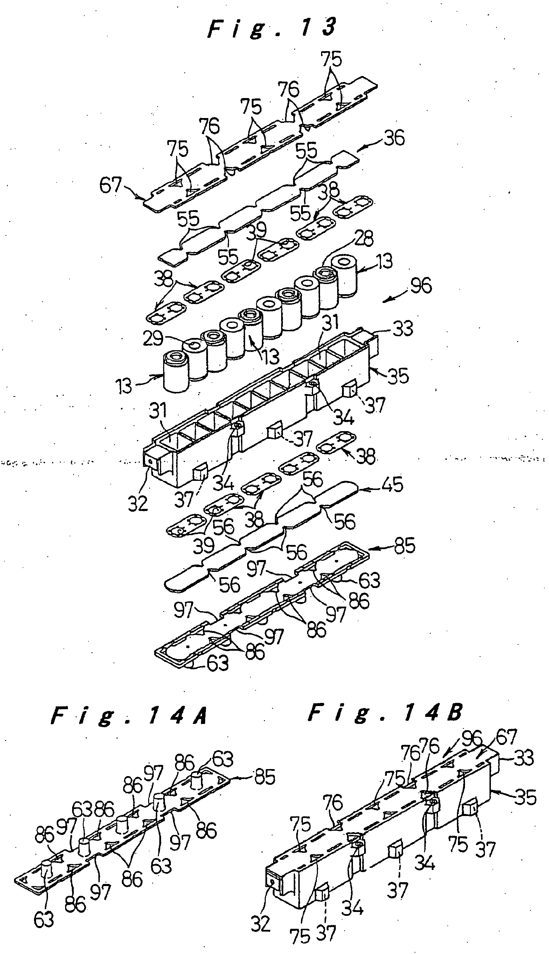

Fig. 13 is an exploded perspective view of a battery module 96 according to still another embodiment of the present invention; Fig. 14 is a perspective view of a lower cover of the above battery module 96 while being inverted, and Fig. 14B is a perspective view of the battery module 96 that has been completely assembled. In the battery module 12 of the embodiment shown in Fig. 1, a case is described in which two cell rows are arranged in parallel, each of which includes ten cells 13 arranged in line. On the other hand, in the battery module 96 of this embodiment, ten cells 13 are arranged in a single row and are accommodated.

This battery module 96 has substantially the same structure as that obtained by dividing the battery module 12 of the previous embodiment into two. Thus, the same reference numerals as those used in the battery module 12 are used in the battery module 96 and the redundant description is omitted. Only differences between this battery module 96 and the above battery module 12 are described below. The cells 13 are the same as those described in the respective embodiments described above. A holder case 35 includes ten cell-accommodating portions 31 arranged in line and also includes the positive and negative terminals 32 and 33 for external connection provided at both ends; respectively, in accordance with the arrangement of the cell-accommodating portions 31. The connection plate 38 is the same as that in the first embodiment. The upper and lower elastic-sheets 36 and 45 include triangular notches 55 and 56 on both sides in the longitudinal direction, that correspond to the spaces between the cells 13 and the cell-accommodating portions 31.

An upper cover 67 is provided with triangular heat-radiation holes 75 at positions corresponding to the notches 55 of the elastic sheet 36, as well as relief notches 76 at positions corresponding to the coupling members 34 of the holder case 35. A lower cover 85 is provided with triangular heat-radiation holes 86 at positions corresponding to the notches 56 of the elastic sheet 45, as well as relief notches 97 at positions corresponding to the respective coupling members 34 of the holder case 35. Moreover, five supporting-leg projections 63 are provided to project, on the lower surface of the lower cover 85, as shown in Fig. 14A.

The above battery module 96 is assembled into the shape shown in Fig. 14B, by the assembly procedure similar to that described for the battery module 12 of the previous embodiment. Since this battery module 96 has the same structure as the battery module 12 of the previous embodiment except that the output voltage is reduced to half, the same effects are obtained. As an application, two battery modules 96 are mutually coupled via the coupling members 34 to form a battery module unit; a required number of such battery module units are then coupled; and the coupled battery module units is used as a driving power supply for an electric bicycle or an electric tool which requires a lower driving power than an electric vehicle. In this case, since such battery module units are impervious to vibration or shock, those are suitable.

### INDUSTRIAL APPLICABILITY

As described above, according to a connecting structure of the present invention, a connection plate, that is a simple flat plate, is welded at both ends to two cells in a stable posture without causing a trouble such as a defective joint by performing welding twice, i.e., once for jointing the connection plate and a connection-electrode portion and once for jointing the connection plate and a bottom of a case of the cell. Therefore, this connecting structure is suitable for largely improving the yield, largely reducing the number of the welding times and improving the productivity. In addition, since cells are arranged with their cell axes arranged in parallel, the distance of the current path between the two cells is made minimum, i.e., the shortest distance between the ring-shaped connection-electrode portion of one of the two cells and the outer circumferential portion of the bottom of the other cell that are close to each other. Therefore, this connecting structure is advantageous to large reduction in the electric resistance.

Moreover, according to a battery module using the connecting structure of the present invention, the use of a holder case made of synthetic resin having the uniquely determined dimensions eliminates the needs of the insulation ring required in the conventional battery module or the outer tube made of resin, and also prevents variation in the dimensions from being generated after the assembly processes so as to provide the precisely-shaped battery module. Therefore, this battery module is useful to reduction of the material cost and improvement of the productivity. In addition, this battery module includes cell-accommodating portions for steadily holding the respective cells without jolting the cells, and heat-radiation paths between the respective cells. Therefore, this battery module is suitable for effectively cooling all of a relatively large number of cells.

Furthermore, according to a battery pack formed by using the battery module of the present invention, a plurality of battery module units is easily coupled by a simple fixing means, and formed to have a very solid structure while being easily integrated by using a plurality of outer plates. Therefore, this battery pack is suitable for production with quite high productivity. In addition, the number of the battery modules can be changed only by changing the shapes of the outer plates each of which is formed by bending a plate. Moreover, when a larger number of battery modules are integrated, the integrated battery modules do not require a cooling mechanism for cooling the respective cells, such as a cooling fin blade, that was required in the conventional technique, because the battery module has holes and notches. Thus, this battery pack is suitable for production at a very low cost.

## Claims

1. A connecting structure between cells, including a plurality of cells (13) each of which includes: a cylindrical cell case (14) having a bottom serving as one electrode; a sealing plate (18) for closing an opening of the cell case (14) to be electrically insulated, the sealing plate serving as the other electrode; and a ring-shaped connection-electrode portion (28) formed near an outer circumference of the sealing plate so as to project outward along a cell-axis direction, wherein
the cells (13) are arranged in parallel with their cell axes arranged in parallel, and
a connection plate (38, 84, 90) in form of flat plate is bridged between the connection-electrode portion (28) of one of each two of the cells (13) that are adjacent, and the bottom of the cell case (14) of the other cell (13), and is connected to a portion near the connection-electrode portion (28) and a portion near the bottom of the cell case (14) by welding.

2. The connecting structure between cells according to claim 1, wherein
a concave portion (29) inwardly concaving is formed at a center of the bottom of the cell case (14), and
one side of the connection plate (38, 84, 90) is welded to a portion outside the concave portion (29) at the bottom of the cell case (14).

3. The connecting structure between cells according to claim 1, wherein
the connection plate (38, 84, 90) is a plate formed of three cladding layers of Ni-Cu-Ni.

4. The connecting structure between cells according to claim 1, wherein
a pair of connection plates (84) having the same shape are bridged between the two adjacent cells (13) to be opposed with a predetermined gap therebetween and welded to both sides thereof to electrically connect the cells via both the connection plates (84).

5. The connecting structure between cells according to claim 1, wherein
the connection plate (90) has two thinner diaphragm portions (92) formed at portions at least adjacent to each other out of contact portions between the adjacent two cells (13) and the plate, and
the thinner diaphragm portions (92) are welded to both the cells (13) by laser welding or beam welding.

6. A battery module, having a holder case (30, 35), made of synthetic resin, which has a substantially prismatic shape having a thickness substantially equal to a length of a cell (13) in a cell-axis direction and includes a plurality of cell-accommodating portions (31) arranged in one or more rows, each of the cell-accommodating portions (31) extending through the holder case along the thickness direction of the holder case and being a square seen from the front, the square having a side that is substantially equal in length to the outer diameter of the cylindrical cell (13), wherein
two adjacent cells (13) of the cells (13) inserted into the cell-accommodating portions (31), respectively, are electrically connected and mechanically coupled by any of the connecting structures between cells according to claim 1,
openings on both sides of the holder case (30, 35) in the thickness direction are closed with cover members (53, 54, 67, 85) fixed to the openings, and
each of the cover members (53, 54, 67, 85) is provided with radiation holes (57, 58, 59, 60, 75, 86) at positions corresponding to spaces (44) between the cells (13) and walls of the cell-accommodating portions (31) and portions corresponding to spaces (47) between the connection plate (38, 84, 90) and the walls, the shapes of the radiation holes (57, 58, 59, 60, 75, 86) corresponding to the respective spaces (44, 47).

7. The battery module according to claim 6, wherein
an elastic sheet (36, 45, 48, 49) is interposed between each of the connection plates (38, 84, 90) and each of the cover members (53, 54, 67, 85) on both sides in the thickness direction of the holder case (30, 35), the elastic sheet (36, 45, 48, 49) being provided with radiation holes (46, 50, 51) and radiation notches (52, 55, 56) at positions corresponding to the spaces (44) between the cells (13) and the walls of the cell-accommodating portions (31) and portions corresponding to the spaces (47) between the connection plate (38, 84, 90) and the walls, the shapes of the radiation holes (46, 50, 51) and the radiation notches (52, 55, 56) corresponding to the respective spaces (44, 47).

8. The battery module according to claim 6, wherein
the cell-accommodating portion (31) of the holder case (31) is a rectangle seen from the front instead of a square seen from the front, the rectangle having two first opposing sides the distance between which is substantially equal to the outer diameter of the cell (13) and two second opposing sides the distance between which is larger than the distance between the first sides, and
a pair of supporting ribs (95) is formed to project from respective inner surfaces of the second sides, so that a distance between tips of the ribs (95) is substantially equal to the outer diameter of the cell (13).

9. The battery module according to claim 6, wherein
a positive terminal (32) and a negative terminal (33) for external connection are provided by insert molding integrally with the holder case (30, 35) at one end or both ends thereof in an arrangement direction in which the cell-accommodating portions (31) are arranged, and coupling members are provided by insert molding integrally with the holder case (30, 35) at both sides thereof with respect to the arrangement direction, and
the positive terminal (32) and the negative terminal (33), and the cells (13) respectively adjacent thereto are connected by the connection plates (38, 84, 90).

10. A battery pack, wherein
the holder case (30, 35) of the battery module (12, 94, 96) according to claim 9 is provided with coupling members (34) at one end in the thickness direction on both sides with respect to the arrangement direction and attachment members (37) at the other end in the thickness direction on both sides with respect to the arrangement direction, the coupling members (34) and the attachment members (37) being formed by insert molding,
a plurality of battery module units (64) are provided each of which is formed by integrating two battery modules (12, 94, 96) with each other by coupling them at the respective coupling members (34) with fixing members (65), one of two battery modules (12, 94, 96) being laid on the other with its orientation in the thickness direction inverted,
a plurality of outer plates (68) surround the plurality of battery module units (64) arranged in parallel, the battery module units (64) being integrated with the outer plates (68) by being fixed at the attachment members (37) with fixing members (65) to the outer plates (68), and
the positive terminal (32) and the negative terminal (33) for external connection, of each of the respective battery modules (12, 94, 96) are electrically connected via a bus bar (70), so that the cells (13) incorporated in the respective battery modules (12, 94, 96) are connected in series.

11. The battery pack according to claim 10, wherein
a plurality of supporting-leg projections (63) are formed to project, integrally with the cover member (54, 85) located outside two battery modules (12, 94, 96) constituting the battery module unit (64),
the plurality of outer plates (68) each have insertion concave parts (72) which accommodate tips of the respective supporting-leg projections (63) of each battery module unit (64) at relative positions where they are in contact with each other, and attachment faces (73) formed on both sides of the insertion concave part (72) to fix the attachment member (37) of the battery module unit (64) in a contact state, and
a number of vents (81) are formed in the coupling plate (71) which couples the plurality of outer plates (68) with each other.
